# EUROPEAN PATENT APPLICATION

(11) **EP 1 793 535 A1**
(43) Date of publication of application: **06.06.2007**
(21) Application number: 05026324.3
(22) Date of filing: 02.12.2005
(51) Int. Cl.: H04L 12/403

(54) **Identifier assignemt for identical devices in a LIN network**

(71) Applicant: BITRON S.p.A., 10042 Nichelino (Torino) (IT)
(72) Inventor: Granato, Marco, 10100 Torino (IT)
(74) Representative: Lotti, Giorgio

(57) **Abstract**

The invention regards a network of a LIN type, comprising a "master" and a number n > 2 of "slave" nodes (Slave 1, Slave 2, ..., Slave n-1, Slave n), each node being recognized by the master with an integer identifier number i, where 1<i<n, said network being characterized in that said at least two nodes each possess one respective input INP(i) and one respective output OUT(i), through which they are electrically interconnected in series, and in that, when said at least two nodes are supplied, each node i generates on its output OUT(i), with a repetition period Ts, a negative pulse of duration T(i) + ΔT, where T(i) is the duration of the negative pulse measured on the input INP(i), and ΔT is an imposed delay, Ts being greater than T(n) + ΔT.

## Description

The invention relates to a network of a local-interconnect-network (LIN) type and to a system for managing identical devices in such a network.

In greater detail, the network of a LIN type according to the invention enables management of the slave nodes of a LIN, setting in successive serial communication the individual modules, in such a way that, in the case where one of the modules is replaced, the module that takes its place will automatically know its identifier number without the master having to see to it. The invention relates also to a corresponding system for managing identical devices that constitute the nodes of a LIN.

In the automotive field, the serial communication protocol LIN has been developed, which integrates the computer-area-network (CAN) protocol.

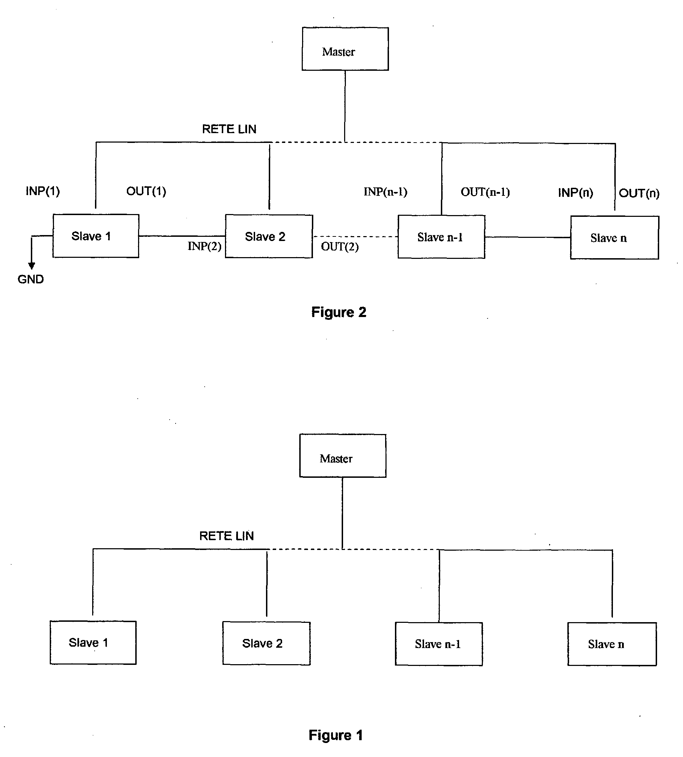

With reference to Figure 1, the LIN provides a serial communication on a bus constituted by a single wire with a low data-transfer rate (20 Kbit/s). This protocol is complementary to the CAN, but does not replace it.

The LIN is used as local subnetwork of the CAN, for example, for controlling actuation of the windows, mirrors, seats, windscreen wipers, and lights, or for monitoring temperatures.

The main characteristics of said protocol are the following:
■ it has a configuration of single driving device or "master" and multiple driven devices or "slaves"; hence, it is not directly compatible with the CAN and requires an interface node;
■ as a consequence of the type of configuration, a arbitration system is not necessary;
■ it is a low-cost network (single wire) and its implementation is based upon a common hardware UART/SCI interface;
■ there are no ceramic or quartz oscillators in the slave nodes, in so far as the network uses a synchronization mechanism of its own (reduction in costs of the nodes);
■ the low transfer rate (up to 20 Kbit/s) limits the problems of electromagnetic interference (EMI); and
■ latency times are guaranteed.

A LIN node does not possess information on the configuration of the overall system, except for the master node. This has an important consequence: the LIN nodes can be added even subsequent to network configuration, without any hardware and/or software modifications in other slave nodes.

The above is a major advantage that this network protocol affords from the standpoint of simplicity and flexibility. Its applications are now above all in the automotive field.

However, the modularity of the network must be handled by the master, a fact that, in the case of replacement of one or more modules, constitutes a further computational load for the master.

In fact, since the modules are identical to one another, if a module is disconnected, it is necessary for said module to know its own reference number. In the traditional case, it is the master that has the task of supplying said information.

A purpose of the present invention is to provide a network of a LIN type which will overcome the drawbacks and will solve the problems described above.

A further specific purpose of the present invention is to provide a system for managing identical devices inserted in a network of a LIN type.

Forming the subject of the present invention is a network of a LIN type according to one of Claims 1 to 6.

A further specific subject of the present invention is a system for managing identical devices according to one of Claims 7 to 9.

The invention will be described in what follows by way of non-limiting illustration with particular reference to some embodiments and with specific reference to the figures of the attached plate of drawing, in which:
- Figure 1 illustrates a local interconnect network (LIN) according to the prior art;
- Figure 2 illustrates a block diagram of a preferred embodiment of the network of a LIN type according to the invention.

With reference to Figure 2, the subsystem constituted by the LIN comprises a master node connected to a variable number of slave nodes.

According to the preferred embodiment of the invention, the slave nodes are each provided with a digital input "INP(i)" and a digital output "OUT(i)". There is moreover a single-wire connection that connects the output OUT(n-1) with the input of the next node INP(n). Furthermore, preferably, the input INP(1) of the first slave node is connected to ground, whilst the output OUT(n) of the last slave node is not connected to the input of any node.

When the nodes are supplied, each node generates cyclically on its output OUT(i) a negative pulse of duration T(i) + ΔT, where T(i) is the duration of the negative pulse measured on the input INP(i) and ΔT is a delay imposed by the node.

The repetition period of the pulses is Ts. The first node the input INP(1) of which is 0 preferably measures a value T(1) = 0. The last node T(n) measures a value equal to (n-1)ΔT. It is clear that for correct operation of the pulse/delay chain, Ts must be greater than (n-1)ΔT.

The value of Ts is preferably comprised between 0.5 and 2 s in order to guarantee that after replacement of a node there will immediately be self-identification of the node itself.

Accordingly, for a number of nodes usual in the automotive field, ΔT is advantageously comprised between 5 and 50 ms.

This method enables each node to characterize itself in the chain with a progressive number n and to associate thereto the identifiers of the LIN messages in writing and reading. This occurs in particular following upon replacement of a node, the node that has been replaced calculating, upon passage of the first delayed pulse, its own identifier number.

The principle described may be applied to each subsystem, but it is useful only if the subsystem is constituted by homogeneous slave nodes, which, in order to perform their functions, do not require H/W and S/W differentiation, but only addressing differentiation.

The advantage of the solution described is represented by the modularity of the slave nodes. The slave nodes are all identical from the hardware and software standpoints and performs different functions depending upon the position assumed in the slave chain. The correspondence between the node number and the specific function is known just to the master node, which attributes the specific function to the particular slave node by means of an appropriate message.

In the foregoing treatment the preferred embodiments have been described and variants of the present invention have been suggested, but it is to be understood that persons skilled in the branch will be able to make modifications and variations without thereby departing from the corresponding sphere of protection, as defined by the annexed claims.

## Claims

1. A network of a LIN type, comprising a "master" and a number n > 2 of "slave" nodes (Slave 1, Slave 2, ..., Slave n-1, Slave n), each node being recognized by the master with an integer identifier number i with 1<i<n, **characterized in that** said at least two nodes each possess one respective input INP(i) and one respective output OUT(i), through which they are electrically interconnected in series, and **in that**, when said at least two nodes are supplied, each node i generates on its output OUT(i), with a repetition period Ts, a negative pulse of duration T(i) + ΔT, where T(i) is the duration of the negative pulse measured on the input INP(i) and ΔT is an imposed delay, Ts being greater than T(n) + ΔT.

2. The network of a LIN type according to Claim 1, **characterized in that** T(1) = 0.

3. The network of a LIN type according to Claim 2, **characterized in that** Ts is comprised between 0.5 and 2 s.

4. The network of a LIN type according to any one of Claims 1 to 3, **characterized in that** ΔT is comprised between 5 and 50 ms.

5. The network of a LIN type according to any one of Claims 1 to 4, **characterized in that** the input INP(1) is connected to ground, whilst the output OUT(n) is not connected to the input of any node.

6. The network of a LIN type according to any one of Claims 1 to 5, **characterized in that** said one respective input INP(i) and said one respective electrical output OUT(i), for i = 1,...n, are digital.

7. A system for managing identical devices, said identical devices (Slave 1, Slave 2, ..., Slave n-1, Slave n) being the nodes of a network of a LIN type, said system being **characterized in that** the network of a LIN type is the network according to any one of Claims 1 to 6.

8. The system according to Claim 7, **characterized in that** each of said identical devices obtains its identifier number i, with 1<i<n, on the basis of the delay of the pulse measured at its own input INP(i).

9. The system according to Claim 7 or Claim 8, **characterized in that** said identifier number is associated to the identifiers of the LIN messages in writing and reading.
